Europäisches Patentamt

European Patent Office

Office européen des brevets

(19)

(11) Publication number: **0 139 768**

**A1**

(12) **EUROPEAN PATENT APPLICATION**

published in accordance with Art. 158(3) EPC

(21) Application number: **84901422.0**

(22) Date of filing: **07.04.84**

Data of the international application taken as a basis:

(86) International application number:
**PCT/JP84/00178**

(87) International publication number:
**WO84/03966 (11.10.84 84/24)**

(51) Int. Cl.⁴: **G 06 F 3/00**

(30) Priority: **07.04.83 JP 61317/83**

(43) Date of publication of application:
**08.05.85 Bulletin 85/19**

(84) Designated Contracting States:
**DE FR GB**

(71) Applicant: **FANUC LTD**
**3580, Shibokusa Aza-Komanba**
**Oshino-mura, Minamitsuru-gun Yamanashi**
**Prefecture(JP)**

(72) Inventor: **KISHI, Hajimu**
**Hinohirayamadai-Jutaku 1104 6-7-8, Asahigaoka**
**Hino-shi Tokyo 191(JP)**

(72) Inventor: **TANAKA, Kunio**
**5-8-13, Tamagawa-cho Akishima-shi**
**Tokyo 196(JP)**

(72) Inventor: **SEKI, Masaki**
**3-15-2-406, Takaidonishi Suginami-ku**
**Tokyo 168(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **METHOD OF CONTROLLING DATA INPUT/OUTPUT.**

(57) A data input/output control method comprises the steps of storing in a memory (13) the relationships between connectors (CNi) and external devices (PPR, etc.) connected to these connectors, and the relationships between the external devices (PPR, etc.) and function keys used to operate them; selecting one of the function keys to select a desired external device connected to the connector corresponding to the selected function key, on the basis of the contents of the memory; and transferring data between a device provided with processor and the selected external device.

Fig. 3

## DESCRIPTION

## DATA INPUT/OUTPUT CONTROL SYSTEM

Technical Field

This invention relates to a data input/output control system in which, even when arbitrary pieces of external equipment are connected to the connectors of an apparatus having a processor, an data input/output can be performed between the processor and these pieces of external equipment. More particularly, the invention relates to a data input/output control system in which the apparatus is provided with a plurality of function keys, correlations are established beforehand between the function keys and the pieces of external equipment connected to the connectors, and data are exchanged between the processor and a piece of external equipment only when a function key is in a prescribed state (e.g., a pressed state).

Background Art

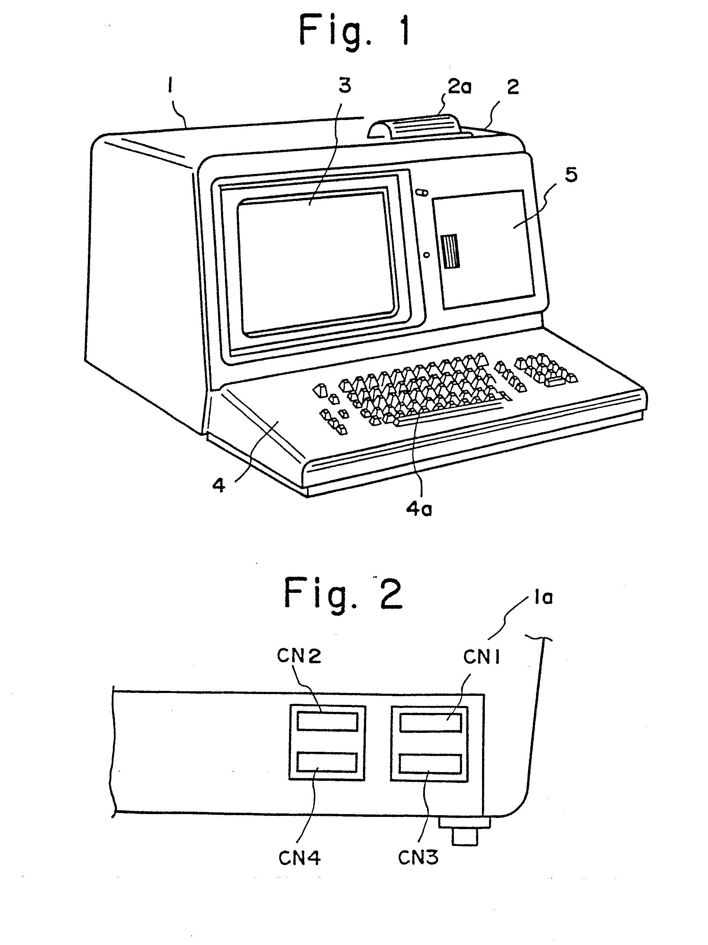

Computers have recently made headway in a variety of fields, and desktop computers in particular find wide use owing to their simplicity and low expense. By way of example, as shown in Fig. 1, a desktop computer for creating NC (numerical control) programs includes a main body 1 having an upper side provided with a printer 2 and a front side provided with a CRT display device 3. Disposed in front of the CRT display 3 is an operator's panel 4 on which there are provided an array of keys 4a such as character keys, numeric keys and function keys. Disposed at the side of the CRT display 3 is a magnetic storage device 5 such as a floppy disk. Numeral 2a denotes a recording paper on which printing is performed by the printer 2.

A microprocessor and memory are incorporated within the main body 1. The processor executes processing on the basis of a basic control program stored in the memory. Instructions and the results of processing are displayed on the CRT display device 3. The processor executes prescribed processing based on commands, data and the like entered from the operator's panel 4, creates an NC program, prints out the program via the printer 2 and stores the program via the magnetic storage device 5.

A desktop computer of this kind comes equipped with the minimum necessary instrumentation owing to limitations imposed by system construction and cost.

Therefore, in order to carry out a greater amount of processing as well as processing which is more sophisticated, expansion of memory is required, as by connecting a magnetic bubble memory or magnetic cassette tape device. Furthermore, depending upon the object of processing, an external printer and a paper tape reader/puncher/printer may also be needed. It is also required that the NC unit and the like be connected online.

These pieces of external equipment are acquired by the user separately of the desktop computer according to the processing which the user himself requires to be performed. The desktop computer is therefore equipped with connectors. Specifically, as shown in Fig. 2, there are provided a plurality (four in the illustration) of connectors $CN_1$ through $CN_4$ at the lower portion of the main apparatus 1 on its back side 1a. The arrangement is such that cables belonging to the external equipment are connected to these connectors so that the external equipment can be connected to the processor bus. However, with this conventional arrangement, the processor of the main apparatus cannot distinguish the kind of external equipment connected. Accordingly, each of the connectors $CN_1$ through $CN_4$ is devoted to a specific piece of external equipment so that the processor may perform an exchange of data with the equipment without recognizing the kind of external equipment connected thereto. As an example, the connector $CN_1$ is for a paper tape reader/puncher, the connector $CN_2$ for a magnetic cassette tape device, the connector $CN_3$ for an XY plotter and the connector $CN_4$ for a tablet.

However, with the conventional arrangement of this type, pieces of external equipment other than those mentioned cannot be connected to the connectors, and difficulty is involved in realizing more sophisticated and higer quality processing. In addition, a printer in one's possession cannot be connected in place of the XY plotter, and a magnetic bubble memory cannot be

connected in place of the cassete tape device.
Equipment already possessed cannot be connected, so
that one must specially purchase the piece of external
equipment that is connectable.  The conventional
arrangement is thus disadvantageous in that there is a
lack of flexibility.  Similarly, since plural pieces of
the same kind of equipment (e.g., XY plotters) cannot
be connected, difficulties are involved in speeding up
data processing.

For these reasons, it has been contemplated to
provide the main body 1 with a number of connectors
capable of dealing with equipment of all kinds.
However, this involves such drawbacks as higher cost
and more complicated processor control.

Accordingly, the applicant has proposed a data
input/output control system in which a piece of
external equipment is connected to a connector of an
apparatus having a processor to perform a data
input/output between the processor and the external
equipment, wherein a correlation between the connector
and the external equipment to be connected thereto is
entered and the entered correlation is used to carry
out the data input/output between the processor and the
external equipment.  According to the proposed system,
even if an arbitrary piece of external equipment is
connected to the connector of the apparatus, the
processor is still capable of correctly exchanging data
with the piece of external equipment.

The arrangement is such that when a data input/output is requested, the processor delivers data solely to a separately designated piece of external equipment or accepts data solely from a separately designated piece of external equipment. To designate an item of external equipment from which data are to be accepted, the arrangement is as follows. The apparatus is provided with a plurality of function keys, each of which is assigned for an input from or an output to a predetermined piece of external equipment. Only when a function key is held depressed will data be delivered as an output from the processor to the piece of external equipment corresponding to the pressed function key or as an input to the processor from the piece of external equipment corresponding to the pressed function key. By way of example, if function keys Fi (i=1, 2, 3...) are provided, a printer having three functions, namely paper tape read, paper tape punch and print functions, is connected to a first connector, a function key F1 is made to correspond to the read function (data input) for reading punched data from a paper tape, a function key F2 is made to correspond to an output function for delivering data as an output to the paper tape, a function key F3 is made to correspond to the print function, an XY plotter capable solely of a graphic output (data output) is connected to a second connector, a function key F10 is made to correspond to the XY plotter, and solely the

function keys Fl, Fl0 are pressed, then the processor will accept data from the paper tape reader (the data input section of the printer) when a data input is requested, and will deliver data as an output solely to the XY plotter when a data output is requested.

Thus, the arrangement is such that a plurality of function keys are provided, each function key is made to correspond to an input or output function of a piece of external equipment in advance, and, by pressing a function key or keys as required, data are accepted from the desired piece of external equipment or delivered as an output to the prescribed piece of external equipment each time.

Therefore, where pieces of external equipment to be connected to an apparatus have been firmly decided, a predetermined number of function keys are provided according to the input and output functions of the external equipment, and the function keys are made to correspond to the input and output functions of the external equipment.

However, the combination of external equipment to be connected to the apparatus as described above differs depending upon the circumstances on the user side or upon the purpose for which the apparatus is used. Certain pieces of external equipment may or may not connected and, even when they are connected, a data input/output with the external equipment may or may not be required. For these reasons, it has been considered to provide function keys for all pieces of external equipment upon supposing all possible equipment combinations, or in other words, so as to deal with all combinations of the external equipment, and to establish correspondence between the function keys and the input and output functions of the external equipment in advance. With such method, however, a large number of function keys must be provided and there are disadvantages in terms of cost. An additional drawback is that the correlations between function keys and the input and output functions of the external equipment are fixed, so that a key arrangement tailored to a specific purpose of use cannot be obtained.

Disclosure of the Invention

An object of the present invention is to provide a data input/output control system in which correlations between function keys and the input and output functions of external equipment can be readily changed depending upon the external equipment to be connected to the apparatus.

Another object of the present invention is to provide a data input/output control system in which the correlations can be set with but few function keys.

Still another object of the present invention is to provide a data input/output control system in which correlations between function keys and the input and output functions of external equipment can be changed by a user freely and easily.

The present invention provides a data input/output system in which the correlations between connectors and pieces of external equipment to be connected to the connectors are applied as inputs to an apparatus, a data input/output is performed between the external equipment and a processor within the apparatus using the entered correlations, the apparatus is provided with a plurality of function keys, correlations between the function keys and the pieces of external equipment to be connected to the connectors are also applied as inputs to the apparatus, and when a function key is in a predetermined state, a data input/output is made possible between the processor and the piece of external equipment corresponding to said function key.

According to the present invention as described above, correlation information between the connectors of the main apparatus and the pieces of external equipment to be connected to these connectors is entered, and the processor of the main body performs an exchange of data with the external equipment on the basis of the correlation information. An advantageous result is that a piece of external equipment other than that of a standard construction can be connected, thereby making possible sophisticated processing of high quality. Another advantage is that a piece of external equipment already in one's possession may be connected to the apparatus so that a data input/output therewith can be controlled, thereby making possible a versatile system arrangement. Furthermore, according to the present invention, a plurality of function keys are provided, and the arrangement is such that a user can readily change the correlations between the function keys and the input and output functions of the external equipment connected to the apparatus. Moreover, it is so arranged that when a function key is in a predetermined state, a data input/output becomes possible between the processor and the piece of external equipment corresponding to that function key. Therefore, with but a few, easy-to-use function keys, the input and output functions of external equipment can be brought into correspondence with the function keys to meet the user's objectives.

Brief Description of the Drawings

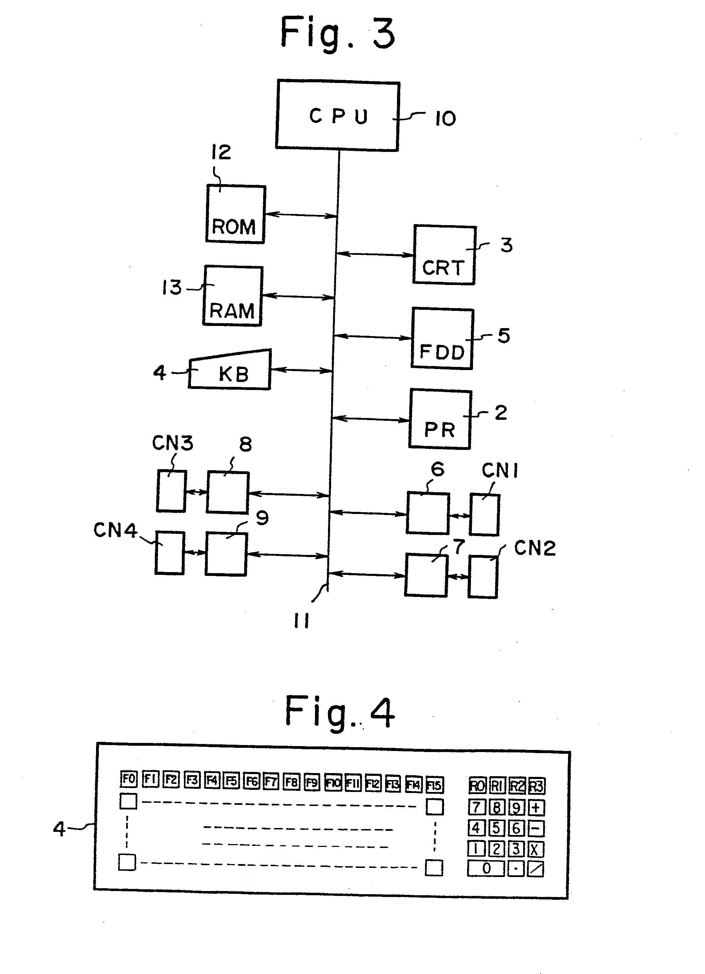

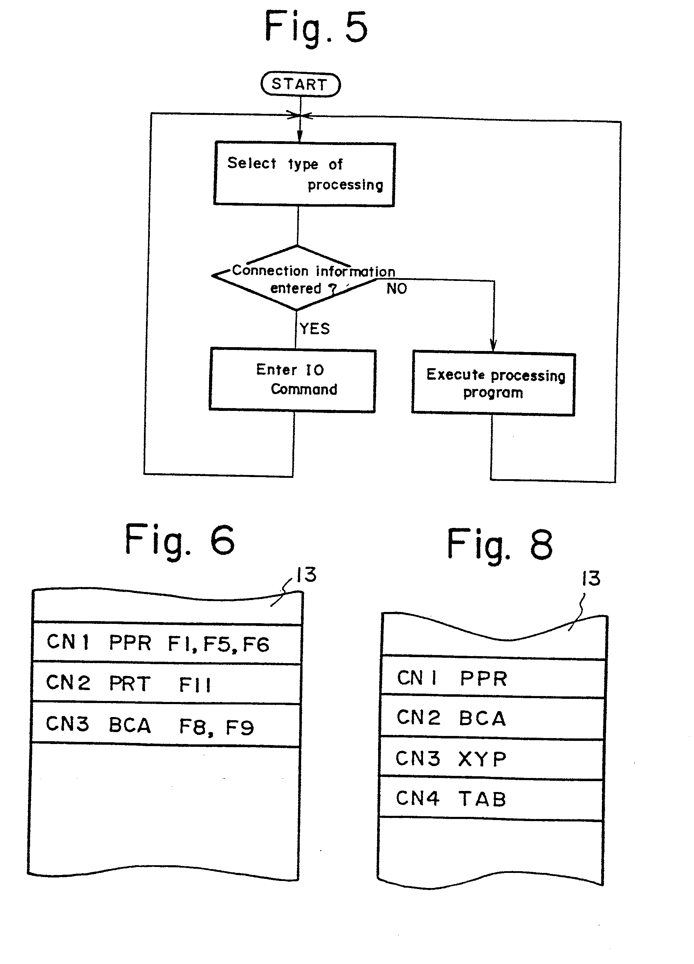

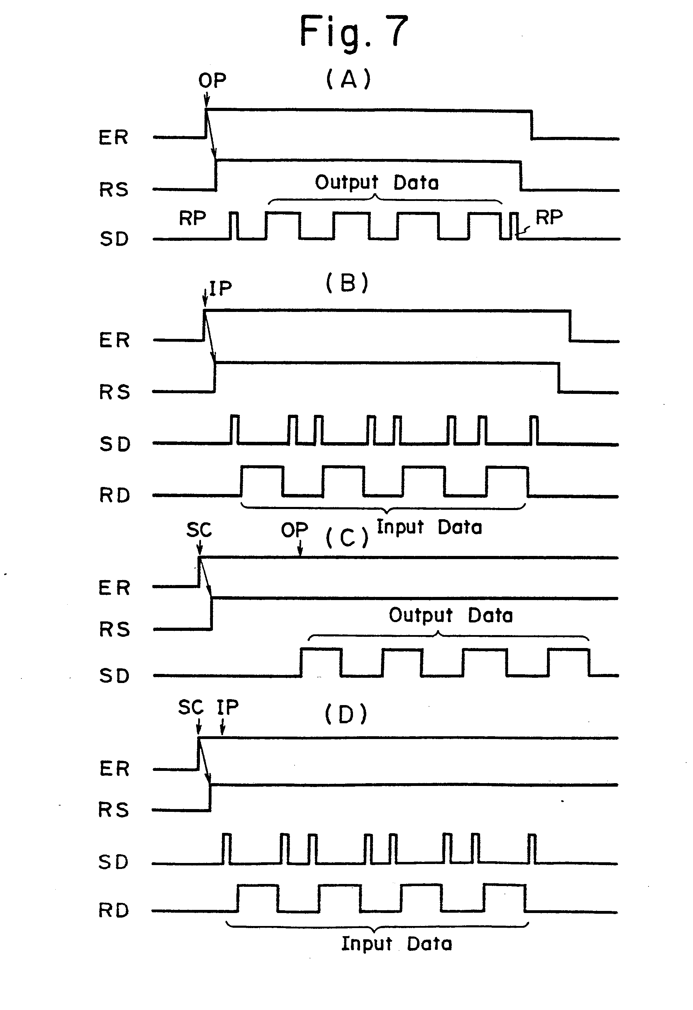

Fig. 1 is a view showing the construction of a common desktop computer, Fig. 2 is a view showing an arrangement of connectors in the construction of Fig. 1, Fig. 3 is a block diagram of an embodiment of the present invention, Fig. 4 is a view for describing keys on an operators' panel, Fig. 5 is a flowchart of processing embodying the present invention, Fig. 6 is a view of stored connection information in the arrangement of Fig. 3, Fig. 7 is a view of signal formats according to the arrangement of Fig. 3, and Fig. 8 is a view of stored standard connection information in the arrangement of Fig. 3.

Best Mode for Carrying Out the Invention

Fig. 3 is a block diagram of an embodiment of the present invention. In the Figure, portions identical with those shown in Figs. 1 and 2 are designated by like symbols. Numerals 6, 7, 8 and 9 denote interface circuits connected respectively to the connectors $CN_1$, $CN_2$, $CN_3$, $CN_4$ (Fig. 2). Numeral 10 denotes a processor, 12 a read-only memory (ROM) which stores a basic control program, and 13 a random-access memory (RAM) for storing the results of calculations performed by the processor 10, data entered from the operator's panel 4, and an application program read out of the magnetic storage device 5. Numeral 11 represents an address data bus for interconnecting the processor 10, ROM 12, RAM 13, operator's panel 4, display 3, printer 2, magnetic storage device 5 and interface circuits 6, 7, 8, 9.

The operation of the arrangement shown in Fig. 3 will now be described. The processor 1 operates in accordance with the control program stored in the ROM 12. Programs other than the basic control program, such as an image processing program or NC tape creation program, are loaded into the RAM 13 from the magnetic storage device 5 prior to operation. Thenceforth, data from the operator's panel 4 are processed by the processor 10 in accordance with the control program stored in the ROM 12 and the program stored in the RAM 13, and the results of processing are stored in the RAM 13. The input data and the results of processing are displayed on the display 3 and, if necessary, can be printed out by the printer 2.

According to the present invention, the arrangement is such that, prior to data processing, the correlations between the connectors $CN_1$ through $CN_4$ and pieces of external equipment to be connected to these connectors are entered, as well as the correlations between a plurality of function keys F0, F1, F2 ... F15 (see Fig. 4) provided on the operator's panel 4 and input/output functions of the pieces of external equipment connected to the connectors. Fig. 5 is a flowchart of the processing.

a. First, a floppy disk storing the desired application program is set in the magnetic storage device 5. When this is done, the application program is loaded into the RAM 13 from the magnetic storage device 5.

b. Thereafter, a display calling for selection of the type of processing appears on the display device 3. The operator responds by entering the type of processing from the operator's panel 4.

For example, the display 3 will call for the operator to press an "R0" key for input processing (data input from external equipment), an "R1" key for output processing (data output to external equipment), an "R2" key for run processing (execution of a loaded program), and an "R3" key for correlation data input processing. The operator selects the kind of processing by pressing the corresponding key on the operator's panel 4.

c. When the operator presses the "R3" key to select correlation data input processing, the processor 10 permits connection information to be entered as an IO command from the operator's panel 4.

An IO command takes on a format of the following kind and is entered from the operator's panel by the operator in accordance with such format:

$$\text{IO name, } CN_i, \{F_j [; Fk (, Fm)]\} NL \qquad \ldots \quad (1)$$

Here, "name" refers to the name of the piece of external equipment to be connected, for which the following abbreviations are used:

PPR (paper tape reader/puncher/printer), BCA (cassette device/bubble memory cassette), PRT (external printer), XYP (XY plotter), TAB (tablet device), NC (NC unit), and AUX (miscellaneous).

Further, "$CN_i$" represents the number (i=1-4) of the connector for connecting the device designated by "name" above, "Fj" is the number (j=1, 8-14) of a function key corresponding to the input function of the external equipment connected to the connector $CN_i$, "Fk" stands for the number (k=5, 6, 8-14) of a function key corresponding to the output function of the external equipment connected to the connector $CN_i$, and "Fm" represents the number (m=5) of a function key corresponding to the printing function of the external equipment connected to the connector $CN_i$. "NL" is a code for indicating the end of a command and is entered by operating a key (NL key) for input designation.

Accordingly, the IO commands will be as follows if the paper tape reader/puncher/printer (PPR) is connected to connector $CN_1$, the external printer (PRT) to the connector $CN_2$, the cassette device (BCA) to the connector $CN_3$, the input function (paper tape reader), output function (paper tape puncher) and print function (printer) of the paper tape reader/puncher/printer are made to correspond to function keys F1, F6 and F5, respectively, the external printer (output function) is made to correspond to function key F11, and the input and output functions of the cassette device are made to correspond to function keys F8, F9, respectively:

①     IO PPR, $CN_1$, F1, F6, F5, F5 NL

②     IO PRT, $CN_2$, F11 NL

③     IO BCA, $CN_3$, F8, F9 NL

d.   The connection information (IO command) entered by the operator is transmitted to the processor 10 and stored as connection information in the RAM 13 via the bus 11.

Fig. 6 illustrates the fashion in which such connection information is stored. The name of a connected piece of equipment and a function key number are stored in correspondence with each of the connector numbers.

The processor 10 uses this information in a recognition operation for the purpose of exchanging data with a designated piece of external equipment when a data input or output is to be made with the external equipment in response to a designation from the operator's panel 4 or from the program, as will be described later.

When entry has been completed, the system returns to the step b.

e. When the operator presses the R0 key, R1 key or R2 key in the above-described step b, the particular processing is performed.

By way of example, the loaded program is run if the R2 key is pressed. If the loaded program is an NC tape creation program, then the processor 10 edits an NC program in accordance with NC data entered from the operator's panel 4 and causes the display device 3 to display a machining graphic based on entered NC data or the NC data itself for confirmation by the operator. Thereafter, the NC data entry, NC program creation and display are repeated in successive fashion to eventually store the created NC program in the RAM 13.

If the R0 key or R1 key is pressed, guidance for designating the selection of a piece of external equipment for input or output is displayed on the display 3. The operator responds by pressing the function key which is provided on the operator's panel 4 and which corresponds to the desired piece of external equipment. As a result, the processor 10 senses the connector numbers and the types of external equipment corresponding to the pressed function keys from the above-described connection information in the RAM 13, designates the interface circuits 6 through 9 that correspond to the connector numbers and performs an input or output with the external equipment via the bus 11. At this time, based on the type of external equipment, the processor 10 controls the data signal format, timing, etc. according to the external equipment. For example, AUX (miscellaneous external equipment) and NC (NC unit) data differ from each other, as shown in Fig. 7.

Specifically, for AUX, Fig. 7(A) shows the situation which prevails in case of an output from the processor 10, and Fig. 7(B) illustrates the situation in case of an input to the processor 10. As shown in Figs. 7(A) and 7(B), a transmission strobe ER is turned on, and a reception strobe RS is turned on correspondingly, each time there is an output or input. For an output [Fig. 7(A)], input data are provided with an identification pulse on both sides thereof to constitute transmission data SD. For an input [Fig. 7(B)], input data RD are transmitted in accordance with timing pulses in the transmission data SD. For NC, Fig. 7(C) shows the situation which prevails in case of an output from the processor 10, and Fig. 7(D) illustrates the situation in case of an input to the processor 10. As shown in Figs. 7(C) and 7(D), a transmission strobe ER is turned on, and a reception strobe RS is turned on correspondingly, at a time SC at which an input/output unit is selected. For an output [Fig. 7(C)], transmission data SD are delivered as an output in accordance with an output operation OP. For an input [Fig. 7(D)], input data RD are transmitted in accordance with an input IP, in synchronism with timing pulses in the transmission data SD.

These control operations are performed by the processor 10 through control of interface circuits depending upon the type of external equipment.

In a case where inputs are received from the aforementioned external equipment, the data from the external equipment are transferred to the RAM 13 via the interface circuits 6 - 9 and bus 11 to be used in subsequent processing. Conversely, where outputs are delivered to external equipment, data (processing results) from the RAM 13 are transferred to the external equipment via the bus 11 and interface circuits 6 - 9 to be stored, printed, etc.

With the present invention, transmission rate (baud rate) and type of stop bit can be designated besides the abovementioned correlation data.

In such case, the following IO command format is used in place of that shown in formula (1):

$$\text{IO name, } CN_i, \{F_j[, Fk (, Fl)]\} (, BR_m) (, S_n) \text{ NL}$$

$$\dots (2)$$

Here, "$BR_m$" (m=0-10) indicates the baud rate, wherein m=50 corresponds to 50 baud, m=1 corresponds to 100 baud, and so on through m=10, which corresponds to 9600 baud. "$S_n$" (n=0-2) represents a stop bit, wherein n=0 indicates one bit, n=1 two bits, and n=2 1.5 bits.

When the operator makes an input from the operator's panel 4 in accordance with this format, the transmission rate and stop bit are stored in correspondence with a connector number in the RAM 13 just as shown in Fig. 6 described above. The processor is thus capable of bringing an input/output data format into conformance with a piece of external equipment. It also becomes possible to connect to a piece of external equipment having any transmission rate or stop bit.

The present invention also makes it possible to omit entry of part of an IO command.

In other words, correspondence between connector numbers and external equipment is stored in the RAM 13 beforehand as standard connection information.

By way of example, as shown in Fig. 8, $CN_1$-PPR (paper tape reader/puncher/printer), $CN_2$-BCA (bubble cassette), $CN_3$-XYP (XY plotter), $CN_4$-TAB (tablet) can be set in advance. Then, with respect to a connector for which there is no IO command, processing can progress on the assumption that the standard piece of external equipment that has been set is to be connected to the connector.

For example, with the aforementioned example of connections, connection information will be stored in the RAM 13 as shown in Fig. 6 even if the IO command ① is not entered.

Likewise, with the present invention, entry of a function key number can also be omitted. This is done by presetting a correspondence table between the kinds of external equipment and the function key numbers as a standard pattern in the RAM 13. Then, in a case where no function key number has been entered, the processor 10 creates the above-described connection information on the assumption that a function key number in the table has been designated.

The following is an example of the contents of the table:

    PPR: F1, F6, F5

    BCA: F8, F9

    NC: F8, F9

    AUX: F8, F9

    XYP: F10

    PRT: F5

Industrial Applicability

The present invention is well-suited for use in desktop numerical control computers for controlling machine tools and industrial robots.

CLAIMS:

1. A data input/output control system for connecting external equipment to a connector of an apparatus having a processor, a memory, a keyboard and the connector for connecting external equipment, and for effecting a data input/output between said processor and external equipment, characterized in that data indicative of a correlation between the connector and external equipment to be connected to the connector are entered into a memory, a data input/output is performed between the processor and external equipment by using said entered data indicative of the correlation, the keyboard of the apparatus is provided with a plurality of function keys, a correlation between a function key and external equipment connected to said connector is capable of being changed by a command, data indicative of said correlation are entered into the memory of the apparatus by said command, and when a predetermined function key is selected, an exchange of data is capable of being performed between the processor and external equipment corresponding to said function key.

2. A data input/output control system according to claim 1, characterized in that function keys are made to correspond to respective input and output functions of said external equipment, and an input and output of data are capable of being performed between the processor and external equipment when respective function keys are selected.

3. A data input/output control system according to claim 1 or claim 2, characterized in that said apparatus is provided with a plurality of connectors.

0139768

Fig. 1

Fig. 2

2

# Fig. 3

# Fig. 4

3

# Fig. 5

```
        ( START )
            │
    ┌───────▼───────┐
    │  Select type of │
    │    processing   │
    └───────┬────────┘
            │
         ◇ Connection information ◇ ──── NO ───┐
           entered ?                            │
            │                                   │
           YES                                  │
            │                                   │
    ┌───────▼───────┐              ┌───────────▼─────────┐
    │   Enter IO     │              │  Execute processing │
    │   Command      │              │      program        │
    └────────────────┘              └─────────────────────┘
```

# Fig. 6                          # Fig. 8

```
                    ⌇13                            ⌇13
┌─────────────────────┐          ┌─────────────────────┐
│                     │          │                     │
├─────────────────────┤          ├─────────────────────┤
│ CN1  PPR  F1,F5,F6  │          │ CN1   PPR           │
├─────────────────────┤          ├─────────────────────┤
│ CN2  PRT   F11      │          │ CN2   BCA           │
├─────────────────────┤          ├─────────────────────┤
│ CN3  BCA   F8, F9   │          │ CN3   XYP           │
├─────────────────────┤          ├─────────────────────┤
│                     │          │ CN4   TAB           │
│                     │          ├─────────────────────┤
│                     │          │                     │
└─────────────────────┘          └─────────────────────┘
```

Fig. 7

0139768

4

# INTERNATIONAL SEARCH REPORT

International Application No. PCT/JP84/00178

**I. CLASSIFICATION OF SUBJECT MATTER** (if several classification symbols apply, indicate all) [3]

According to International Patent Classification (IPC) or to both National Classification and IPC

Int. Cl[3]    G06F 3/00

**II. FIELDS SEARCHED**

| Minimum Documentation Searched [4] | |
|---|---|
| Classification System | Classification Symbols |
| IPC | G06F 3/00 - 3/04, 15/00 - 15/16 |

| Documentation Searched other than Minimum Documentation to the Extent that such Documents are included in the Fields Searched [5] |
|---|
| Kokai Jitsuyo Shinan Koho   1971 - 1984 |

**III. DOCUMENTS CONSIDERED TO BE RELEVANT** [14]

| Category* | Citation of Document, [16] with indication, where appropriate, of the relevant passages [17] | Relevant to Claim No. [18] |
|---|---|---|
| Y | JP, A, 50-31753 (Anker Werke A.G.), 28. March, 1975 (28. 03. 75), P1 - P28 | 1 - 3 |
| Y | JP, A, 57-106932 (Fujitsu Ltd.), 3. July, 1982 (03. 07. 82), Columns 1 to 12 | 1 - 3 |
| Y | JP, A, 56-11532 (Yokogawa Electric Works, Ltd.), 4. February, 1981 (04. 02. 81), Columns 1 to 5 | 1 - 3 |

\* Special categories of cited documents: [16]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search [2] | Date of Mailing of this International Search Report [2] |
|---|---|
| June 13, 1984 (13.06.84) | July 2, 1984 (02.07.84) |
| International Searching Authority [1] | Signature of Authorized Officer [20] |
| Japanese Patent Office | |